# EUROPÄISCHE PATENTANMELDUNG

(11) **EP 1 258 645 A1**
(43) Veröffentlichungstag der Anmeldung: **20.11.2002**
(21) Anmeldenummer: 02008546.0
(22) Anmeldetag: 16.04.2002
(51) Int. Cl.: F16D 13/68, F16D 21/08

(54) **Drehmomentübertragungseinrichtung**

(30) Priorität: 11.05.2001 DE 10123569; 28.07.2001 DE 10136899
(71) Anmelder: ZF Sachs AG, 97424 Schweinfurt (DE)
(72) Erfinder: Heiartz, Markus, Dipl.-Ing., 97084 Würzburg (DE); Diemer, Mattias, Dr.-Ing., 97464 Niederwerrn (DE); Kleuker, Christoph, Dipl.-Ing. (FH), 97469 Gochsheim (DE)

(57) **Zusammenfassung**

Drehmomentübertragungseinrichtung (1) zwischen einem Motor und einem Getriebe, wobei der Abtriebswelle des Motors und der Getriebeeingangswelle mindestens eine Vorrichtung, zum Zu- oder Abschalten der Drehmomententübertragung, bestehend aus mindestens einer Kupplungsscheibe (4) mindestens einer innerhalb eines Gehäuses angeordneten Anpressplatte (5) und einer entsprechenden Betätigungseinrichtung (6) wobei das Eingangsteil (8) mindestens einer Kupplungsscheibe (4) mit der Abtriebswelle (2) fest verbunden ist, und dass der Ausgangsbereich (9) der Kupplungsscheibe (4) gegenüber dem Eingangsteil (8) relativ beweglich ist.

## Beschreibung

Die Erfindung betrifft eine Drehmomentübertragungseinrichtung gemäß dem Oberbegriff des Patentanspruches 1.

Aus der EP 07 06 463 B1 ist bereit eine Drehmomentübertragungseinrichtung bekannt, bei der ein mit dem Kupplungsgehäuse fest verbundener Rotor einer elektrischen Maschine bezüglich der Kurbelwelle drehbar gelagert ist. Weiterhin erfolgt die Drehmomentübertragung von der Kurbelwelle auf das Kupplungsgehäuse mittels einer auf der Kurbelwelle drehfest, aber axial verschiebbar gelagerten Kupplungsscheibe, welche mit ihren radial außen angeordneten Reibbelägen eine erste Gegenreibfläche des Kupplungsgehäuses beaufschlagt, wobei eine hiermit verbundenen Anpressplatte im Eingriff ist. Die Betätigung, das Aus- und Einkuppeln, erfolgt über ein durch die Kurbelwelle hindurch geführtes Gestänge. Weiterhin weist diese Drehmomentübertragungseinrichtung eine zweite Kupplungsscheibe auf, die bezüglich der Getriebeeingangswelle drehfest, jedoch axial verschiebbar gelagert ist. Diese weist ebenso einen entsprechenden Reibeingriff über Reibbeläge an einer weiteren Reibfläche des Gehäuses sowie einer weiteren, dieser Kupplungsscheibe zugeordneten Anpressplatte auf. Die Betätigung dieser Kupplung erfolgt ebenso über eine Membranfeder mit Membranfederzungen in üblicher Ausführung. Neben der konstruktionsbedingt schwierigen Betätigung dieser Drehmomentübertragungseinrichtung erweist sich diese Ausführungsform als kostenintensiv.

Aufgabe der Erfindung ist es daher, eine gattungsgemäße Drehmomentübertragungseinrichtung dahingehend weiterzubilden, dass die Leistungsfähigkeit erhöht und eine betriebssichere Ausführungsform erstellt wird.

Gelöst wird diese Aufgabe durch das Kennzeichen des Patentanspruches 1. Dies gewährt eine bedeutend höhere Drehmomentübertragungsfähigkeit sowie eine kostengünstigere Ausführung.

In weiterer Ausgestaltung der Erfindung ist vorgesehen, dass der Ausgangsbereich der Kupplungsscheibe gegenüber dem Eingangsteil zumindest begrenzt radial und/oder axial und/oder kardanisch beweglich ist. Hierdurch wird eine sichere Funktionsweise ohne Einbußen der Modellierbarkeit erreicht, sowie durch die radiale und/oder kardanische Beweglichkeit ein Großteil der Schwingungen einer Kurbelwelle nicht bzw. nur gedämpft übertragen. Vorteilhaft ausgebildet ist die Erfindung, wenn die Verbindung zwischen dem Ausgangsbereich und dem Eingangsteil der Kupplungsscheibe über mindestens ein federndes Element erfolgt. Wird nun die Kupplung ausgekuppelt, so wird hierdurch der Ausgangsbereich von seiner Eingriffsstelle mit dem Gehäuse entfernt. Erfindungsgemäß wirkt hierbei der Ausgangsbereich mit einem am Eingangsteil befestigten Anschlag zusammen. Hierdurch wird gewährleistet, das in Folge der Axialbewegung des Ausgangsbereichs beim Auskuppeln eine vollständige definierte Trennung zwischen der Abtriebswelle und dem Gehäuse erfolgt.

Eine erfindungsgemäße Ausgestaltung sieht hierbei vor, dass das federnde Element als Tellerfeder ausgebildet ist. Insbesondere ist die Federkraft des federnden Elementes derart angepasst, dass im eingekuppelten Zustand die Federkraft geringer ausfällt als im ausgekuppelten Zustand. Dies ist insbesondere durch eine entsprechende Ausgestaltung einer Tellerfeder erzielbar, aber auch z. B. durch entsprechend ausgeführte, einzelne Federlaschen oder Federbleche kann eine solche Wirkung erzielt werden.

In weiterer erfindungsgemäßer Ausgestaltung ist vorgesehen, dass das Gehäuse eine der Anzahl der Kupplungsscheiben entsprechenden Anzahl von radial verlaufenden Kontaktflächen aufweist. Diese Ausführungsform eignet sich insbesondere für das Übertragen besonders hoher Drehmomente bzw. im Falle radial kleiner Bauräume. Bei Vorsehen von mehreren Kupplungsscheiben in fester Verbindung mit einer Abtriebswelle eines Motors kann eine beachtliche Reduzierung des radialen Bauraumes erzielt werden.

Um ein sicheres und mit entsprechendem Betätigungskomfort versehenes Einkuppeln zu gewährleisten, sieht die Erfindung vor, dass die Kontaktflächen von radial außen nach radial innen verlaufen. Eine weitere vorteilhafte Ausgestaltung sieht vor, dass mindestens eine radial nach innen verlaufende Kontaktfläche auf einer Stirnseite mit einer Kupplungsscheibe zusammenwirkt und die andere Stirnseite die Kraftspeicher für eine weitere Kupplungsscheibe aufweist.

In vorteilhafter Ausgestaltung wird vorgeschlagen, dass innerhalb des Gehäuses ein Anlasser und/oder eine Generator angeordnet ist. Erfindungsgemäß dient hierbei das Gehäuse gleichzeitig als Rotor für den Generator und/oder Anlasser, bzw. in alternativer Ausgestaltung ist das Gehäuse am Stator des Generators und/oder Anlassers gelagert. Diese Ausgestaltung erlaubt eine kompakte Integration einer Drehmomentübertragungseinrichtung mit einem Anlasser oder wahlweise einem Generator bzw. einer Kombination von beidem.

Eine alternative Ausgestaltung sieht vor, dass auf den Außenumfang des Gehäuses ein Anlasser und/oder ein Generator einwirkt oder angeordnet ist. Diese Ausführung eignet sich insbesondere für nicht konzentrische Ausführungen von Drehmomentübertragungseinrichtung zu Generator bzw. Anlasser. Eine weitere Ausgestaltung offenbart, dass ein Anlasser und/oder Generator außerhalb des Gehäuses angeordnet ist.

Mögliche Ausgestaltungsvarianten sind in der Zeichnung im Einzelnen dargestellt.

Es zeigt:
- Fig. 1: eine Drehmomentübertragungseinrichtung als Schnittzeichnung in Zusammenwirken mit einer Abtriebswelle;
- Fig. 2: eine erfindungsgemäße Kupplungsscheibe, aufgeteilt in einen oberen Halbschnitt 2a und einen unteren Halbschnitt 2b;
- Fig. 3: ein Kraft-Wegdiagramm des federnden Elementes
- Fig.4: eine Draufsicht einer weiteren erfindungsgemäßen Ausführung einer Kupplungsscheibe für besonders hohe Drehmomente;
- Fig. 5: eine Schnittansicht der Kupplungsscheibe nach Fig. 4;
- Fig. 6: xeine Draufsicht einer weiteren erfindungsgemäßen Kupplungsscheibe;

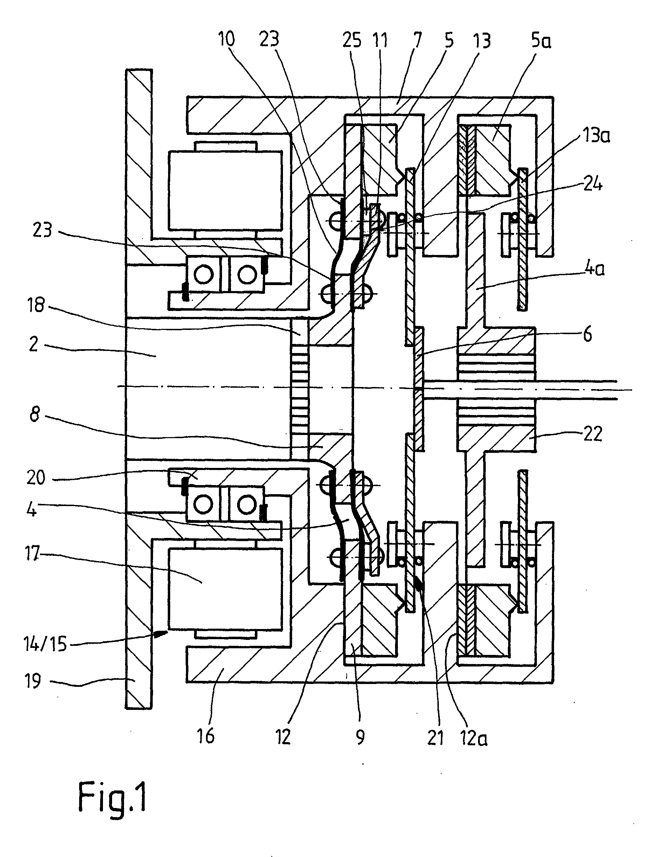

Bei der in Fig. 1 gezeigten Drehmomentübertragungseinrichtung 1 ragt eine Abtriebswelle eines Motors bzw. eine Abtriebswelle einer Antriebseinheit in die Drehmomentübertragungseinrichtung 1 und ist an ihrem einen axialen Ende verbunden mit dem Eingangsteil 8 einer Kupplungsscheibe 4. Hierbei ist das Eingangsteil 8 über einer Hirth-Verzahnung 18 sowie mehreren über den Umfang der Hirth-Verzahnung verteilten Verschraubungen mit der Abtriebswelle drehfest und axial fest verbunden. Alternativ zu dieser Anbindung sind auch andere Möglichkeiten denkbar, die das Eingangsteil 8 gegenüber der Abtriebswelle 2 zentrierten und axial - sowie drehfest - positionieren. Denkbar ist hierbei z. B. ein Zentrierbund mit Passstiften, welche in eine Bohrung durch das Eingangsteil sowie in die Abtriebswelle 2 außerhalb der Drehachse eingreifen. In ihrem radial äußeren Bereich wirkt die Kupplungsscheibe 4 mit einem Gehäuse 7 und einer Anpressplatte 5 zusammen. Weiterhin ist an dem Gehäuse eine elektromotorische Einheit angebunden, die sowohl als Anlasser 14 bzw. als Generator 15 wahlweise aber auch sogenannter Startergenerator ausgeführt sein kann. Hierzu weist die Drehmomentübertragungseinrichtung einen Stator 17 auf, welcher über eine flanschartig ausgebildetes Anschlussstück 19 fest am Motorgehäuse gelagert ist. Diese Anbindung am Motorgehäuse kann z. B. durch eine Verschraubung erfolgen. Der Rotor 16 umgreift den Stator 17 im radial äußeren Bereich und geht in Axialrichtung in das Gehäuse 7 über. Auf der dem Anschlussstück 19 gegenüberliegenden Seite des Stators 17 bildet sich das Gehäuse 7 flanschartig nach radial innen fort und mündet in eine zylindrische Lagerstelle 20, die radial innerhalb des Anschlussstückes 19 angeordnet ist. Die Fig. 1 weist an dieser Stelle zwei gegeneinander in Axialrichtung vorgespannte Kugellager auf, die das Gehäuse 7 radial innerhalb des Stators 17 drehbar lagern. Alternativ zu der hier dargestellten Ausführung der Lagerung zwischen dem Anschlussstück 189 und der Lagerstelle 20 ist es auch möglich, eine Gleitlagerung einzubauen. An dem sich radial erstreckenden, zwischen dem Rotor 16 und der Lagerstelle 20 befindlichen Bereich ist an dem Gehäuse 7 eine ringartig umlaufende Kontaktfläche 12 zum Zusammenwirken mit dem Ausgangsbereich 9 der Kupplungsscheibe 4 angeordnet. Die Anpressplatte 5 wird mit ihrer Anlagefläche auf den Ausgangsbereich 9 über einen als Membranfeder ausgebildeten Kraftspeicher 13 gedrückt und sorgt hierbei für den Kraftschluss zwischen der Kupplungsscheibe 4 und dem Gehäuse 7. Bei der hier dargestellten Ausführungsform ist die Schwenklagerung 21 des als Membranfeder ausgebildeten Kraftspeichers 13, an radial nach innen weisenden Fortsätzen des Gehäuses 7 befestigt, die zumindest in ihrem radial äußeren Bereich, der mit einer weiteren Kupplungsscheibe 4a zusammenwirkt, als ringartig umlaufender Flansch mit einer weiteren Kontaktfläche 12a dargestellt. Weiterhin weist dieses Ausführungsbeispiel ebenso eine weitere Anpressplatte 5a zusammenwirkend mit einem weiteren Kraftspeicher 13a auf. Die Funktion der Bauteile, die mit um das Kurzzeichen a ergänzten Bezugsziffern betitelt sind, entspricht im Wesentlichen der einer konventionellen Kraftfahrzeugkupplung, wie sie zwischen Motor und Getriebe bei üblichen PKW eingesetzt wird. Die Funktion der Drehmomentübertragungseinrichtung 1 ist nun folgende:

Bei ausgeschaltetem Motor wird im Ruhezustand die Kupplungsscheibe 4 über die Kontaktfläche 12 des Gehäuses 7 sowie der Anpressplatte 5 infolge der Anpresskraft des Kraftspeichers 13 kraftschlüssig eingespannt. Ebenso ist die Kupplungsscheibe 4a, welche im Wesentlichen mittels einer üblichen Längsverzahnung in einer Nabe drehfest aber längs verschieblich auf einer hier nicht dargestellten Getriebeeingangswelle sitzt, sowie mit Torsionsschwingungsdämpfern versehene und auf einer Belagfederung aufgebrachte Reibbeläge aufweisende Kupplungsscheibe darstellt, über deren Kontaktfläche 12 a sowie der Anpressplatte 5a kraftschlüssig mit dem Gehäuse 7 verbunden. Soll nun die Brennkraftmaschine gestartet werden, so kann dies in dem Falle, wenn die elektrische Maschine als Anlasser ausgestaltet bzw. einen Startergenerator mit Anlasserfunktion darstellt, über das Drehmoment dieses Elektromotors erfolgen. Idealerweise erfolgt dies dadurch, dass sowohl die Kupplungsscheibe 4 als auch die Kupplungsscheibe 4a durch Verschwenken der Kraftspeicher 13 bzw. 13a ihre kraftschlüssige Verbindung mit dem Gehäuse 7 aufhebt. Bei einer Verschwenkung des als Membranfeder ausgeführten Kraftspeichers 13 um die Schwenklagerung 21 verlagert sich die Anpressplatte 5 ebenso in axialer Richtung vom Anlasser 14 weg zur Getriebeseite hin. Hierdurch wird der Ausgangsbereich 9 hinsichtlich seinem Eingriff mit der Anpressplatte 5 sowie der Kontaktfläche 12 des Gehäuses 7 freigegeben und die drehfeste Verbindung zwischen der Abtriebswelle 2 und dem Gehäuse 7 aufgelöst. In analoger Weise erfolgt die Aufhebung der drehfesten Verbindung zwischen der Getriebeeingangswelle 3 mit der Kupplungsscheibe 4a und dem Gehäuse 7. Das Gehäuse 7 ist nun bezüglich der Abtriebswelle 2 und der Getriebeeingangswelle 3 frei drehbar und wird nur durch die Ausbildung der Lagerung an der Lagerstelle 20 mit dem Anschlussstück 19 bezüglich der Anbindung des Anschlussstücks 19 am Motorgehäuse drehbar aber axial festgehalten. Der Stator 17 des Anlassers 14 bringt nur den Rotor 16 und somit das Gehäuse 7 auf die erforderliche Drehzahl, wobei nun der Anlasser 14 über das bei dieser Drehzahl anliegende Drehmoment verfügt. Des Weiteren weist das zahl anliegende Drehmoment verfügt. Des Weiteren weist das Gehäuse 7 in seiner offenbarten Ausgestaltung ein nicht unerhebliches Trägheitsmoment mit entsprechender kinetischer Energie auf. Um nun die Antriebsmaschine über die Kurbelwelle zu starten, verschwenkt der Kraftspeicher 13 bezüglich seiner Schwenklagerung 21 derart, dass die Anpressplatte 5 den Ausgangsbereich 9 der Kupplungsscheibe 4, welcher hier als Reibbelag ausgeführt ist, bis diese zwischen der Anpressplatte 5 und der Kontaktfläche 12 festgespannt ist. Hierdurch wird das Moment des Anlassers 14 über die Kupplungsscheibe 4 auf die Abtriebswelle 2 übertragen und der Verbrennungsmotor gestartet. Wie vorab erwähnt, ist die Kupplungsscheibe 4 an der Abtriebswelle 2 über eine drehfest und axiale unbewegliche Verbindung, wie z. B. die gezeigte Hirth-Verzahnung 18 mit ihrer entsprechenden Verschraubung, angebunden. Die Anbindung des Ausgangsbereichs 9 an das Eingangsteil 8 erfolgt daher über zumindest ein federndes Element 10, welches in Fig. 1 als ringartig umlaufende Tellerfeder ausgebildet ist. Diese Tellerfeder weist sowohl an ihrem inneren radialen Endbereich als auch am äußeren radialen Endbereich in Umfangsrichtung mehrere aufeinanderfolgende, zungenartige Fortsätze 23 auf, durch welche entsprechende Befestigungsbolzen, wie z. B. Nieten, sich hindurch erstrecken. Die radial innenliegenden, zungenartigen Fortsätze 23 sind demnach am Flansch des Eingangsteils 8 und die radial außenliegenden, zungenartigen Fortsätze 23 sind mit dem Ausgangsbereich 9 verbunden. Das in Fig. 1 gezeigte Ausführungsbeispiel weist zwei in Axialrichtung aufeinanderfolgende beidseits des Flansches des Eingangsteils 8 angeordnete federnde Elemente 10 auf. Zusätzlich sind am Flanschbereich des Eingangsteils 8 zusammen mit dem federnden Elemente 10 in Umfangsrichtung mehrere, zumindest zwei Anschläge 11 mit angebracht. Diese Anschläge 11 sind derart angeordnet, dass sie in Axialrichtung mit ihrem radial äußeren Endbereich eine Überdeckung mit den radial äußeren Nieten, über die der Ausgangsbereich 9 an die federnden Elemente 10 befestigt ist, eingehen. Des Weiteren weisen die Anschläge 11 an ihren dem Ausgangsbereich 9 zugewandten Axialflächen Ausrückbegrenzungsflächen 24 zum Zusammenwirken mit dem zugeordneten Ausrückbegrenzungsmittel 25 auf. Bei der in Fig. 1 dargestellten Ausführungsform der Drehmomentübertragungseinrichtung 1 ist der Ausgangsbereich 9 der Kupplungsscheibe 4 kraftschlüssig verbunden mit der Kontaktfläche 12 und der Anpressplatte 5 über die durch den Kraftspeicher 13 aufgebrachte Anpresskraft. Hierbei besteht zwischen den einander zugewandten axialen Flächen der Ausrückbegrenzungsmittel 25 und der Ausrückbegrenzungsflächen 24 ein in dieser Zeichnung nicht ausreichend dargestellter Spalt S. Wird nun über die Betätigungsvorrichtung 6 der Kraftspeicher 13 um seine Schwenklagerung 21 verschwenkt, womit die Anpressplatte 5 in Axialrichtung von dem Ausgangsbereich 9 sich hinwegbewegt, so wandert infolge der Federkraft der federnden Elemente 10 der Ausgangsbereich 9 in Axialrichtung bis die einander zugewandten axialen Flächen, die Ausrückbegrenzungsfläche 24 und die des Ausrückbegrenzungsmittels 25, zur gegenseitigen Anlage kommen. Dieser Spalt S ist geringer als die axiale Verlagerung der Anpressplatte 5 in dieselbe Richtung. Hierdurch hebt der Ausgangsbereich 9 der Kupplungsscheibe 4 von der Kontaktfläche 12 ab, ohne jedoch an der Anpressplatte 5 erneut zur Anlage zu kommen. Der hierdurch realisierte Abhub reicht aus für die Aufhebung der drehfesten Verbindung zwischen dem Gehäuse 7 und der Kupplungsscheibe 4. Des Weiteren ist durch die Ausbildung der federnden Elemente 10 eine drehfeste Verbindung zwischen dem Ausgangsbereich 9 und dem Eingangsteil 8 gewährleistet, wobei zeitgleich eine zumindest begrenzte kardanische Beweglichkeit zwischen dem Ausgangsbereich 9 und dem Eingangsteil 8 der Kupplungsscheibe 4 vorhanden ist. Hierdurch können insbesondere Biegeschwingungen der Kurbelwelle, der Abtriebswelle 2, infolge des Verbrennungsdruckes bzw. Fertigungsungenauigkeiten kostengünstig abgefangen werden. Des Weiteren ist durch die Lagerung des Gehäuses 7 am Motorgehäuse und somit Entkoppelung der Lagerung von den Auswirkungen der Abtriebswelle 2 des Motors die Ausführung des Generators bzw. Anlassers als elektrische Maschine besonders kostengünstig und genau herstellbar. Taumel- und Radialschwignungen werden nicht direkt auf das Gehäsue 7 und somti an den toro 16 übertragen. Durch die Zwischenshaltung der Kupplungsscheibe 4 können schwingungsdämpfende Mechanismen zwischengeschaltet werden. Da das Gehäuse 7 prinzipbedingt nicht von den Verformungen der Abtriebswelle 2 infolge der Verbrennungsvorgänge beeinflusst wird, kann insbesondere der Luftspalt zwischen Stator und Generator besonders eng ausgeführt werden.

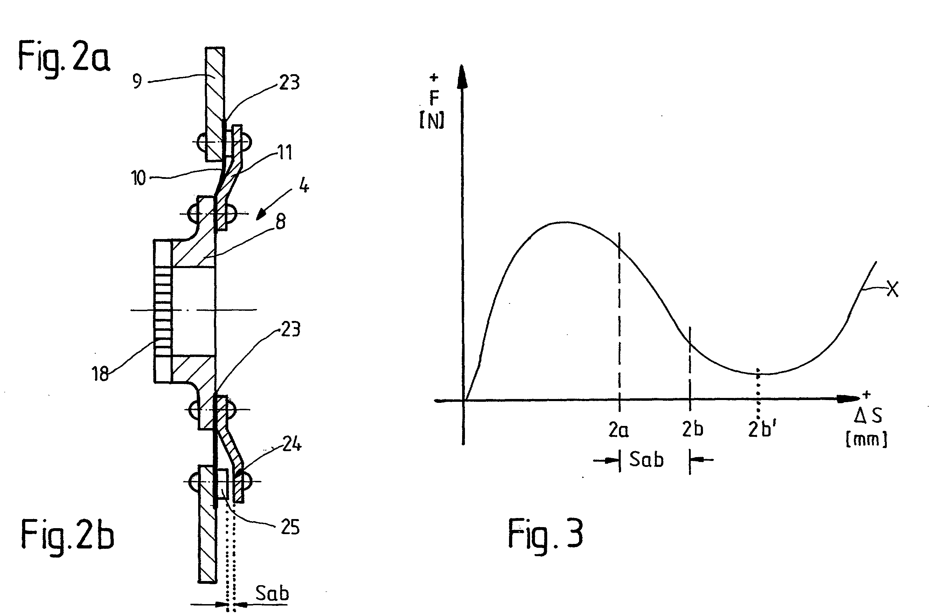

Die in Fig. 2a dargestellte Kupplungsscheibe 4 entspricht im Wesentlichen der Ausführung gemäß Fig. 1, wobei hiervon abweichend nur ein als Tellerfeder ausgeführtes federndes Element 10 zwischen dem Eingangsteil 8 und dem Ausgangsbereich 9 eingesetzt ist. Die Darstellung gemäß der Fig. 2a entspricht einem ausgekuppelten Zustand, wie er nicht in Fig. 1 dargestellt ist. Hierbei liegt das Ausrückbegrenzungsmittel 25 mit seinem axialen Flächenbereich, welcher auf den Anschlag 11 zuweist, federkraftbelastet durch das federnde Element 10 an der Ausrückbegrenzungsfläche 24 des Anschlages 11 an. Hierzu sei auf die Darstellung in Fig. 3 hingewiesen, bei der ein Kraftwegediagramm für das federnde Element 10 dargestellt ist. Die Ordinate F stellt hierbei die Kraft in Newton im positiven Sinne dar und die Abszisse ΔS den Federweg in mm gemessen am Ausrückbegrenzungsmittel 25. Die hier in diesem Koordinatensystem gezeigte Kurve X spiegelt den Kraftwegeverlauf des federnden Elementes 10 wieder. Der Kurvenpunkt 2a, abgebildet auf der Abszisse S, entspricht der Vorspannung der Feder im ausgekuppelten Zustand, wenn das Ausrückbegrenzungsmittel 25 am Anschlag 11 zur Anlage gekommen ist, wie dies der Fig. 2a entspricht. Die Fig. 2b unterscheidet sich von der Fig. 2a lediglich durch die sich unterscheidende Position des Ausgangsbereichs 9 und somit der Vorspannung des federnden Elementes 10. Die gezeigte Stellung entspricht einem eingekuppelten Zustand analog zu der Darstellung in Fig. 1. Die sowohl in Fig. 2b als auch in Fig. 3 dargestellte Strecke S_{ab} entspricht den während eines Ausrückvorganges zurückgelegten axialen Verschiebeweg des Ausgangsbereiches 9. Dadurch, dass die Federkennlinie X des federnden Elementes 10 im eingekuppelten Zustand eine geringere Federkraft aufweist als im ausgekuppelten Zustand, kann die Belastung auf die Abtriebswelle 2, insbesondere den Axiallagern dieser Welle, besonders klein gehalten werden. Durch die Ausbildung der Kraftwegkurve X des federnden Elementes 10 gemäß Fig. 3 ergibt sich bei einem Verschleiß des Ausgangsbereichs 9 infolge Reibung eine annähernd gleichbleibend geringe Federkraft im eingekuppelten Zustand 2b. Insbesondere wenn der Ausgangsbereich 9 als Reibbelag ausgebildet ist, wird bei dauerhaftem Gebrauch bzw. sehr häufigem Ein- und Auskuppeln die Belagstärke in Axialrichtung allmählich abnehmen. Hierdurch wandert der dem Einkuppelzustand entsprechende Punkt 2b auf der Abszisse ΔS in Pfeilrichtung. Da er hierbei ein ausgeprägtes Tal der Kraftwegkurve X durchläuft, ist die Änderung bis zum maximalen Tiefpunkt in dieser Richtung dahingehend, dass bei fortschreitendem Verschleiß die Federkraft im eingekuppelten Zustand, entsprechend dem Punkt 2b', weiter sinkt, bis diese nach Durchschreiten des Tiefpunktes infolge weiterem Reibbelagverschleiß erst allmählich wieder ansteigt. Vorteilhaft ist die Drehmomentübertagungseinheit 1 hierbei derart ausgelegt, dass bei maximalen Dickenverschleiß des Ausgangsbereichs 9 die Federkraft F des federnden Elementes 10 gemäß dem eingekuppelten Zustand 2b' nur maximal bis einem dem ursprünglichen Ausgangspunkt 2b entsprechenden Betrag ansteigt.

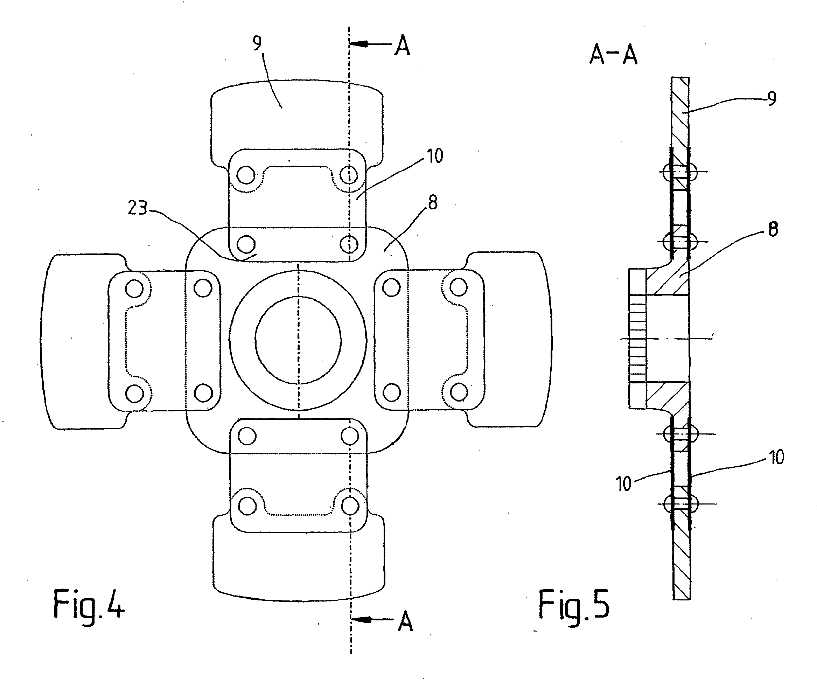

Die in Fig. 4 und Fig. 5 dargestellte Ausführungsform einer Kupplungsscheibe 4 unterscheidet sich von den vorab gezeigten Varianten insbesondere durch ein Fehlen des Anschlages 11 sowie einer beidseits des Flansches des Eingangsteils 8 angeordneten federnden Elementen 10, welche hier nicht als ringartig umlaufende Tellerfedern, sondern vielmehr durch einzelne Federbleche, jeweils paarweise vernietet mit dem Eingangsteil 8, und als Sinterpads ausgebildeten Ausgangsbereiche 9. Die federnden Elemente 10 sind bei dieser Ausgestaltung derart bemessen, dass im ausgekuppelten Zustand die federnden Elemente 10 kräftefrei bzw. derart gegenseitig vorgespannt sind, dass die darin enthaltene jeweilige Federkraft entgegengerichtet zueinander ist und sich aufhebt. Zum eingekuppelten Zustand sind die Federb lec he aus ihrer dem Kräftegleichgewicht entsprechenden Position verlagert. Hierdurch ergibt sich jedoch, dass im eingekuppelten Zustand eine höhere Federkraft der federnden Elemente 10 vorliegt als im ausgekuppelten Zustand. Diese Ausführungsform empfiehlt sich daher vor allem für jene Anwendungsfälle, bei denen die höhere Kraft im eingekuppelten Zustand auf das Kurbelwellenaxiallager von untergeordneter Bedeutung ist.

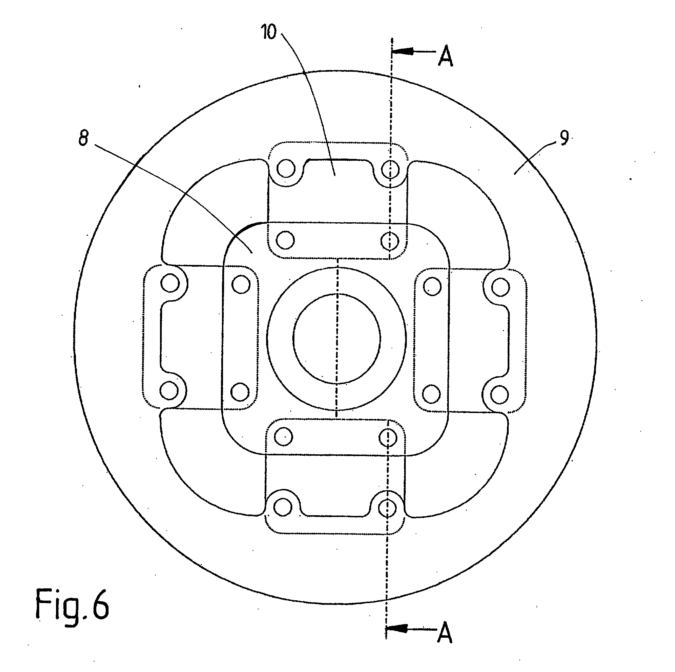

Bei der in Fig. 6 dargestellten Variante wurde wiederum ein in Kreisform verlaufender Reibring als Ausgangsbereich 9, vernietet mit dem Eingangsteil über vier über den Umfang verteilte, einzelne federnde Elemente 10. Entsprechend der Ausführungsform gemäß Fig. 4 und 5 weist auch diese Ausgestaltung keine Anschläge 11 als axiale Wegbegrenzung für den Ausgangsbereich 9 im ausgekuppelten Zustand auf, sondern vielmehr entspricht auch hier der ausgekuppelte Zustand einer kraftfreien, der Ruhelage entsprechenden Stellung der federnden Elemente 10.

Vorteilhafte Ausgestaltungen der Erfindung sind durch Unterkombination der jeweiligen Beispiele möglich und entsprechend als zur Erfindung gehörig anzusehen.

### Bezugszeichenliste

- 1.: Drehmomentübertragungseinrichtung
- 2.: Abtriebswelle
- 3.: Getriebeeingangswelle
- 4.: Kupplungsscheibe
- 5.: Anpressplatte
- 6.: Betätigungsvorrichtung
- 7.: Gehäuse
- 8.: Eingangsteil
- 9.-: Ausgangbereich
- 10.: federndes Element
- 11.: Anschlag
- 12.: Kontaktfläche
- 13.: Kraftspeicher
- 14.: Anlasser
- 15.: Generator
- 16.: Rotor
- 17.: Stator
- 18.: Hirth-Verzahnung
- 19.: Anschlussstück
- 20.: Lagerstelle
- 21.: Schwenklagerung
- 22.: Nabe
- 23.: zungenartige Fortsätze
- 24.: Ausrückbegrenzungsflächen
- 25.: Ausrückbegrenzungsmittel

## Patentansprüche

1. Drehmomentübertragungseinrichtung zwischen einem Motor und einem Getriebe, wobei der Abtriebswelle des Motors und der Getriebeeingangswelle mindestens eine Vorrichtung, zum Zu- oder Abschalten der Drehmomentübertragung, bestehend aus mindestens einer Kupplungsscheibe, mindestens einer innerhalb eines Gehäuses angeordneten Anpressplatte und einer entsprechenden Betätigungseinrichtung,
**dadurch gekennzeichnet,**
**dass** das Eingangsteil (8) mindestens einer Kupplungsscheibe (4) mit der Abtriebswelle (2) fest verbunden ist, und **dass** der Ausgangsbereich (9) der Kupplungsscheibe (4) gegenüber dem Eingangsteil (8) relativ beweglich ist.

2. Drehmomentübertragungseinrichtung nach Anspruch 1,
**dadurch gekennzeichnet,**
**dass** der Ausgangsbereich (9) der Kupplungsscheibe (4) gegenüber dem Eingangsteil (8) zumindest begrenzt radial und/oder axial und/oder kardanisch beweglich ist.

3. Drehmomentübertragungseinrichtung nach Anspruch 1,
**dadurch gekennzeichnet,**
**dass** die Verbindung zwischen dem Ausgangsbereich (9) und dem Eingangsteil (8) der Kupplungsscheibe (4) über mindestens ein federndes Element (10) erfolgt.

4. Drehmomentübertragungseinrichtung nach Anspruch 3,
**dadurch gekennzeichnet,**
**dass** der Ausgangsbereich (9) mit einem am Eingangsteil (8) befestigten Anschlag (11) zusammenwirkt.

5. Drehmomentübertragungseinrichtung nach Anspruch 3,
**dadurch gekennzeichnet,**
**dass** das federnde Element (10) als Tellerfeder ausgebildet ist.

6. Drehmomentübertragungseinrichtung nach einem der Ansprüche 3 bis 5,
**dadurch gekennzeichnet,**
**dass** die Federkraft des federnden Elementes (10) derart angepasst ist, **dass** im eingekuppelten Zustand die Federkraft geringer ausfällt als im ausgekuppelten Zustand.

7. Drehmomentübertragungseinrichtung nach Anspruch 1,
**dadurch gekennzeichnet,**
**dass** das Gehäuse (7) eine der Anzahl der Kupplungsscheiben (4) entsprechenden Anzahl von radial verlaufenden Kontaktflächen (12) aufweist.

8. Drehmomentübertragungseinrichtung nach Anspruch 7,
**dadurch gekennzeichnet,**
**dass** die Kontaktflächen (12) von radial außen nach radial innen verlaufen.

9. Drehmomentübertragungseinrichtung nach Anspruch 7 oder 8,
**dadurch gekennzeichnet,**
**dass** mindestens eine radial nach innen verlaufende Kontaktfläche auf einer Stirnseite mit einer Kupplungsscheibe (4) zusammenwirkt und die andere Stirnseite die Kraftspeicher (13) für eine weitere Kupplungsscheibe (4) aufweist.

10. Drehmomentübertragungseinrichtung nach Anspruch 1,
**dadurch gekennzeichnet,**
**dass** innerhalb des Gehäuses (7) ein Anlasser und/oder eine Generator angeordnet ist.

11. Drehmomentübertragungseinrichtung nach Anspruch 10,
**dadurch gekennzeichnet,**
**dass** das Gehäuse (7) gleichzeitig als Rotor (16) für den Generator (15) und/oder Anlasser (14) dient.

12. Drehmomentübertragungseinrichtung nach Anspruch 10 oder 11,
**dadurch gekennzeichnet,**
**dass** das Gehäuse (7) am Stator (17) des Generators (15) und/oder Anlasser gelagert ist.

13. Drehmomentübertragungseinrichtung nach Anspruch 1,
**dadurch gekennzeichnet,**
**dass** auf den Außenumfang des Gehäuses (7) ein Anlasser (14) und/oder ein Generator (15) einwirkt oder angeordnet ist.

14. Drehmomentübertragungseinrichtung nach Anspruch 1,
**dadurch gekennzeichnet,**
**dass** ein Anlasser (14) und/oder Generator (15) außerhalb des Gehäuses (7) angeordnet ist.
